Europäisches Patentamt

**European Patent Office**

**Office européen des brevets**

(19)

(11) Numéro de publication: **0 075 059**
**A1**

# DEMANDE DE BREVET EUROPEEN

(12)

(21) Numéro de dépôt: **81830170.7**

(51) Int. Cl.³: **B 60 R 25/04**

(22) Date de dépôt: **22.09.81**

(43) Date de publication de la demande: **30.03.83**
**Bulletin 83/13**

(84) Etats contractants désignés: **AT CH DE FR GB IT LI**

(71) Demandeur: **Minelli, Arrigo, Via Giulio Govoni, 5,**
**I-40066 Pieve di Cento (Bologna) (IT)**

(72) Inventeur: **Minelli, Arrigo, Via Giulio Govoni, 5,**
**I-40066 Pieve di Cento (Bologna) (IT)**

(74) Mandataire: **Sassatelli, Franco, c/o INIP Ufficio**
**Internazionale Brevetti per Deposito di Brevetti e Marchi**
**via Mazzini, 170, I-40139 Bologna (IT)**

(54) **Dispositif électromécanique antivol pour autovéhicules.**

(57) Par l'enlèvement de la clef du tableau, on peut bloquer en même temps le capot du moteur, où se trouve le dispositif, et couper tous les organes du véhicule automobile. L'extraction de la clef cause la fermeture d'un micro-interrupteur (19) permettant un prélèvement instantané de courant pour donner un démarrage de décollage à un petit moteur autofreinant (10) dont l'arbre (28) supporte un système de trois cames (29, 30, 31), une desquelles ferme le micro-interrupteur (19) qui a permis le démarrage et porte en fermeture un pivot bloquant le capot.

Pour désactiver le dispositif, on introduit à nouveau la clef, déterminant ainsi un autre effet de démarrage du moteur (10) qui, avec la deuxième came (30), ferme un autre micro-interrupteur (20) débloquant le pivot de fermeture. La troisième came (31) actionne un levier (32) déterminant la fermeture et l'ouverture du pivot. Ce levier (32) en fermeture actionne un poussoir qui désactive le courant.

- I -

"Dispositif electromecanique antivol pour autovéhicules".
L'invention se réfère à un dispositif antivol pour véhicules automobiles avec actionnement électromécanique qui, par enlèvement de la clef du tableau dans la cabine de direction permet en même temps de bloquer le capot du moteur, où ce dispositif est monté, et de désactiver la ligne prélèvant le courant de la battérie, empêchant ainsi le démarrage du moteur et l'accès aux organes relatifs.

On connaît des dispositifs antivol: un dispositif du type mécanique prévoit le blocage de la direction dans le corps coaxial dans lequel il tourne. Ce dispositif peut être désactivé en forçant la rotation. D'autres dispositifs de type électromécanique prévoient l'activation d'une sonnerie lorsqu'une pression est exercée sur la portière de l'auto. Ce système cause dérangement puisqu'il entre en activation même si des chocs accidentels se vérifient et peut être désactivé en ouvrant le capot et en coupant le courant. Ces systèmes qui peuvent ainsi être violés, ne s'avèrent pas en condition de résoudre le problème parce qu'ils permettent d'accéder aux dispositifs antivol et laissent l'appareil moteur prédisposé pour le départ qui, par conséquent, peut être mis en marche lorsque le dispositif antivol a été mis hors d'efficacité.

Le trouvé permet la solution du problème moyennant l'emploi de un dispositif monté qui est barré et désactive l'alimentati on de courant aux organs de direction du véhicule. L'appareil est appliqué solidaire sur la parois du capot moteur et opère avec effet contemporain soit sur la ligne d'alimentation de la battérie, soit avec le capot bloqué.

Pour activer le dispositif, on ôte la clef relative du tableau dans la cabine de direction, en déterminant ainsi la fermeture d'un micro-interrupteur permettant un prélèvement instantané de courant de la battérie du véhicule automobile qui donne un démarrage de départ à un petit moteur électrique. L'arbre de ce dernier soutient un système de trois cammes, dont l'une ferme le micro qui avait précédemment permit l'effet de mise en marche et porte en fermeture un pivot qui exécute le blocage du capot.

Pour désactiver le dispositif, on introduit à nouveau la clef qui détermine un autre effet de démarrage du petit moteur qui, avec la deuxième camme, ferme un autre micro bloquant le pivot de fermeture capot. La troisième camme agit sur un levier déterminant la fermeture ou l'ouverture du pivot. Le dit levier, en phase de fermeture, actionne un poussoir qui désactive la ligne de courant de la battérie.

Forme d'exécution pas limitative est illustrée dans les croquis de la Table I, où la Fig. I est la vue du schéma électrique du dispositif. La Fig. 2 est la vue schématique de l'interrupteur qui coupe le courant; la Fig. 3 est la vue du dispositif mécanique et la Fig. 4 est la section du dit dispositif, avec en vue les cammes 29, 30 et 3I, avec la 3I opérant sur le levier 32, les cammes 29 et 30 qui agissent respectivement sur les micros I9 et 20, et le levier 32 actionnant le poussoir 24.

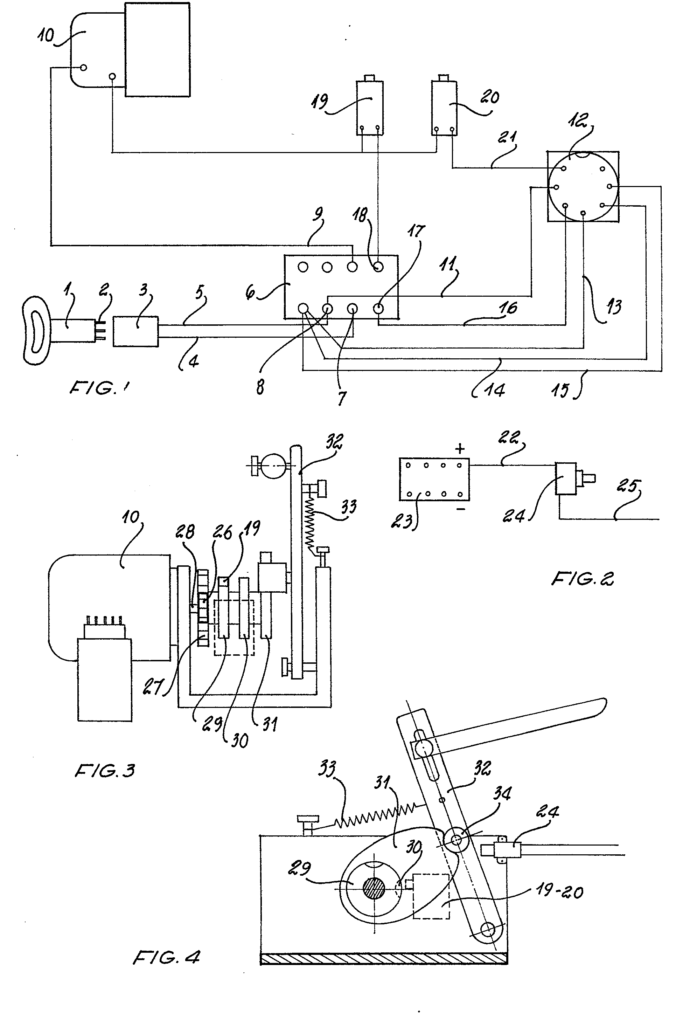

- 3 -

Suivant une version qu'on réproduit à titre d'exemple et,comme telle,pas limitative du procédé,la clef à insertion 2 est introduite dans lesiège 3 sur le tableau avec lignes 4 et 5, protégées par une enveloppe contre les coupes,portant au bornier 6 monté dans le capot moteur sur les points de départ 7 et 8 et qui poursuivent avec les lignes 9 conduisant au moteur I0 et II qui porte aux contacts d'un relais I2.De la plaque à bornes 6 partent les lignes I3,I4 et I5 qui vont au relais I2.De ce dernier,la ligne I6 porte en I7 sur la plaque à bornes 6 .et,du point I8 du bornier,au micro I9 et de celui-ci au moteur I0.Au micro I9,lemicro 20 est connecté qui,à son tour,est relié au relais I2 moyennant la ligne 2I.De cette façon,un circuit fermé est déterminé.

Le circuit est intégré par une autre connexion positive partant de la battérie 23 et qui conduit à un interrupteur à poussoir 24;par le câble 25,ce dernier porte au tableau de série de la voiture en siège d'introduction de la clef pour la mise en marche du véhicule.Avec le dispositif enclenché de cette façon il ne sera pas possible de démarrer l'ensemble moteur faute de courant.En ôtant la clef I,on met en marche,moyennant la fermeture du micro I9,le moteur électrique avec frein automatique I0,qui par le couple de pignons 26 et 27 démarre l'arbre 28 sur lequel les cammes 29,30 et 3I sont montées.

Dans la première phase de fermeture,la camme 29 cause la fermeture du micro I9 mettant l'appareil en fermeture.La fermeture est effectuée en actionnant le levier 32 qui,en même temps,coupe le courant au moyen de l'interrupteur 24.Le mouvement est donné à ce levier par la camme 3I qui opère alternativement en fermeture et en ouverture.

- 4 -

La phase de déblocage est consentie par l'introduction de la clef I dans le siège 3 qui donne l'impulsion au micro 20,déterminant ainsi la rotation de la camme 30 qui ouvre le circuit. La camme 3I opère sur le levier 32,les cammes 29 et 30 agissent sur les micros I9 et 20,alors que le levier 32 actionne le poussoir 24.De plus,33 est le ressort de rappel du levier 32;34 est un roulement pour aider la rotation sur la camme 3I.

Les composants,les matériels,les accessoirs et le schéma électrique pourront être différemment intégrés et réalisés.

- I -

REVENDICATIONS.

I)Dispositif électromécanique antivol pour autovéhicules,ca ractérisé par le fait que,pour activer le dispositif,il faut extraire la clef relative du tableau dans la cabine de direction,déterminant ainsi la fermeture d'un micro-interrupteur qui permet un prélèvement instantané de courant de la battérie du véhicule donnant un démarrage à un petit moteur électrique.L'arbre de ce moteur porte un système de trois cammes, dont une ferme le micro qui avait précédemment consenti l'ef fet de démarrage et porte en fermeture un pivot exécutant le blocage du capot.

2)Dispositif électromécanique antivol pour autovéhicules,se lon la revendication précédente,caractérisé par le fait que, pour désactiver le dispositif,on introduit à nouveau la dite clef qui détermine un autre effet de démarrage du petit moteur qui,avec la deuxième camme,ferme un autre micro-interrupteur débloquant le pivot de fermeture du capot.

3)Dispositif électromécanique antivol pour autovéhicules,se lon les revendications précédentes,caractérisé par le fait que la troisième camme agit sur un levier déterminant la fer meture ou l'ouverture du pivot.Le dit levier,en phase de fer meture actionne un poussoir désactivant la ligne de courant de la batterie.

4)Dispositif électromécanique antivol pour autovéhicules,se lon les revendications précédentes,caractérisé par le fait que une forme d'exécution pas limitative est illustrée dans les croquis de la Table I,où la Fig.I est la vue du schéma du câblage de l'appareil.La Fig.2 est la vue schématique de l'interrupteur qui coupe le courant;la Fig.3 est la vue du

- 2 -

dispositif mécanique,et la Fig.4 est la section de ce dispositif avec en vue les cammes 29,30 et 3I;avec la camme 3I o-
pérant sur le levier 32,les cammes 29 et 30,qui agissent respectivement sur les micros I9 et 20,et le levier 32 actionnant le poussoir 24.Selon une version qu'on reproduit à titre
d'exemple et,comme telle,pas limitative du procédé,la clef I
à insertion 2 est introduite dans la siège 3 sur le tableau
avec lignes 4 et 5 protégées par un enveloppe contre les cou
pes portant au bornier 6 monté dans le support moteur sur les
points 7 et 8 de départ et qui poursuivent avec les lignes 9
qui atteignent le moteur I0 et II portant aux contacts d'un
relais I2.Du bornier 6 partent les lignes I3,I4 et I5 qui vont
aux relais I2.Du dit relais I2,la ligne I6 porte en I7 au bor
nier 6 et,du point I8 du bornier,au micro I9 et de celui-ci
au moteur I0.Au micro I9,le micro 20 est connecté qui,par la
ligne 2I,est à son tour connecté avec le relais I2.On détermine ainsi un circuit fermé.Le circuit est intégré par une au
tre connexion positive 22 partant de la battérie 23 et portant
à un interrupteur avec poussoir 24;moyennant le câble 24,ce
poussoir porte au tableau de série de la voiture en siège de
introduction de la clef conventionnelle pour la mise en marche du véhicule automobile.De cette façon,le dispositif étant
enclenché,il ne sera pas possible de mettre en marche l'ensem
ble moteur faute de courant.

5)Dispositif électromécanique antivol pour autovéhicules,se
lon les revendications précédentes,caractérisé par le fait
que,si l'on ôte la clef I,on met en marche,par la fermeture
du micro I9,le moteur électrique I0 avec frein automatique
qui,moyennant le couple de pignons 26 et 27,démarre l'arbre
28 sur lequel les cammes 29,30 et 3I sont montées.Dans la pre
mière phase de fermeture,la camme 29 détermine la fermeture
du micro-interrupteur I9 qui met l'appareil en fermeture.Cet

- 3 -

te-ci est effectuée en actionnant le levier 32 qui,en même temps, coupe le courant moyennant l'interrupteur 24.Le mouvement à ce levier est donné par la camme 3I qui opère alternativement en fermeture et en ouverture.

6)Dispositif électromécanique antivol pour autovéhicules,selon les revendications précédentes,caractérisé par le fait que la phase de déblocage est consentie par l'introduction de la clef I dans le siège 3 qui donne l'impulsion au micro 20 déterminant la rotation de la camme 30 qui ouvre le circuit.La camme 3I agit sur le levier 32,alors que les cammes 29 et 30 agissent sur les micros I9 et 20,et le levier 32 actionne le poussoir 24.

7)Dispositif électromécanique antivol pour autovéhicules,selon les revendications précédentes,caractérisé par le fait que le levier 32 est prévu équipé avec ressort de rappel 33.

8)Dispositif électromécanique antivol pour autovéhicules,selon les revendications précédentes,caractérisé par le fait que dans le but d'aider la rotation de la camme 3I,un roulement 34 a été prévu.

Par ordre.

0075059

1/1

FIG. 1

FIG. 2

FIG. 3

FIG. 4

**Office européen des brevets**

**RAPPORT DE RECHERCHE EUROPEENNE**

Numéro de la demande

EP 81 83 0170.7

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | DE - C - 562 124 (E. KLAPPER)<br>* revendication; fig. 1 * | 1 | B 60 R 25/04 |
| A | DE - A1 - 2 746 846 (F. LINK)<br>* revendications 1, 11 * | 1 | |
| A | US - A - 3 735 833 (J. SUTKOWSKI) | | |

**DOMAINES TECHNIQUES RECHERCHES (Int. Cl. ³)**

B 60 R 25/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| Berlin | 25-03-1982 | BECKER |

OEB Form 1503.1   06.78